# EUROPEAN PATENT APPLICATION

(11) **EP 4 575 461 A1**
(43) Date of publication of application: **25.06.2025**
(21) Application number: 24217701.2
(22) Date of filing: 05.12.2024
(51) Int. Cl.: G01N 19/04, G01N 3/00

(54) **TESTING APPARATUS AND CORRESPONDING METHOD OF OPERATION**

(30) Priority: 18.12.2023 IT 202300026931
(71) Applicant: G.D S.p.A., 40133 Bologna (BO) (IT)
(72) Inventor: CACCIARI, Valerio, I-40133 Bologna (IT); PASQUI, Simone, I-40133 Bologna (IT); POLLONI, Roberto, I-40133 Bologna (IT)
(74) Representative: Buzzi, Notaro & Antonielli d'Oulx S.p.A.

(57) **Abstract**

Described herein is an apparatus for carrying out tests on joints of sheet packaging materials that are obtained by gluing.

The apparatus comprises:
- a gripping unit (20) configured for withholding at least a first edge (101A, 101B) of a first sample (101) of sheet material;
- at least one further gripping unit (40, 60) configured for withholding at least a first edge (102A, 102B) of a second sample (102) of sheet material;
- a system (70) for applying glue;
- at least one movement system (30, 50) for moving said first gripping unit (20) and/or said second gripping unit (40);
- a detection system (80, 91, 92); and
- a control unit (95) configured for receiving signals from said detection system (80) and for driving said glue-applicator system (70) and said at least one movement system (30, 50), said control unit (95) being configured for implementing an automatic testing cycle.

## Description

The present invention relates to an apparatus for carrying out tests on joints of sheet packaging materials that are obtained by gluing.

Glues for packaging processes supplied by various producers are accompanied by technical specifications that provide information on the compositions and properties of the glues themselves.

However, to guarantee proper performance of the packaging process there is the need to test the glue on the packaging material that will be used in the process in order to be able to analyse its properties and predict its behaviour in real conditions of the process itself.

Consequently, within the industrial plant there is commonly provided a laboratory in which samples made with the packaging material envisaged in the packaging process are glued together using the glue to be analysed, and a series of tests are conducted on the joints between the samples thus formed that are useful to determine the properties of the glue.

On the basis of the results obtained from the above tests, appropriate adjustments may then possibly be made to the operating parameters of the packaging process, with the precise aim of adapting the process as much as possible to the properties of the glue.

Implementation of the aforesaid tests is basically still manual.

In this context, the present applicant has hence set itself the object of providing an apparatus capable of performing automatically tests on joints of sheet packaging materials that are obtained by gluing.

The above object is achieved by means of an apparatus according to claim 1.

The present invention moreover regards a method according to claim 18.

The claims form an integral part of the teaching provided herein.

Further characteristics and advantages of the present invention will emerge clearly from the ensuing description with reference to the annexed drawings, which are provided purely by way of non-limiting example and in which:
- Figure 1 is a front view of the apparatus described herein according to a preferred embodiment;
- Figures 2 to 6 illustrate details of the apparatus of Figure 1; and
- Figures 7A-7C are schematic illustrations of testing methods that can be implemented by the apparatus of Figure 1.

In the ensuing description, specific details are illustrated, aimed at enabling an in-depth understanding of the embodiments. The embodiments may be implemented without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As anticipated above, the apparatus described herein is configured for carrying out tests on joints of sheet packaging materials that are obtained by gluing.

In general, the apparatus described herein comprises:
- a gripping unit, configured for withholding at least a first edge of a first sample of sheet material;
- at least one further gripping unit, configured for withholding at least a first edge of a second sample of sheet material;
- a system for applying glue;
- at least one movement system for moving the gripping unit and/or the at least one further gripping unit;
- at least one detection system; and
- a control unit, configured for driving the glue-applicator system and the at least one movement system, and for receiving signals from the detection system, the control unit being configured for implementing an automatic testing cycle comprising the steps of:
- by means of the glue-applicator system, applying a layer of glue on the first sample;
- by means of the at least one movement system, positioning the second or first sample on the first or second sample, with the layer of glue set in between, and pressing the second or first sample against the first or second sample to obtain, by means of the layer of glue, a joint between the first sample and the second sample;
- by means of the at least one movement system, performing an action of detachment whereby the second or first sample is separated from the first or second sample in a given direction, thus bringing about rupture of the joint; and
- by means of the at least one detection system, detecting one or more data indicating at least one feature of the joint before and/or during and/or after said action of detachment.

In view of the foregoing, the apparatus described herein is hence able to obtain the joint between two samples of sheet material by means of the glue to be analysed and detect one or more features of the joint during a rupture test.

The features of the joint detected in this way evidently provide information on the properties of the glue used.

As will be seen in detail in what follows, the apparatus described herein may, in particular, be configured for implementing at least one of the following tests:
- tensile test;
- peeling test;
- shear-and-slip test.

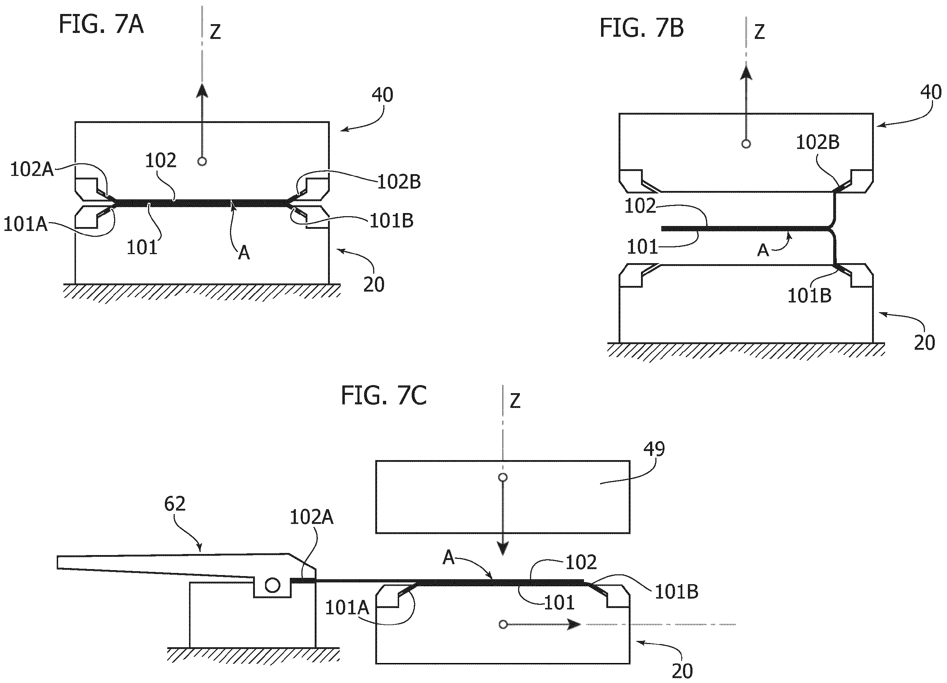

Figures 7A-7C are schematic illustrations of the modes of execution of the above tests on two samples of sheet materials 101, 102, fixed together by means of a joint A that is obtained by gluing.

The orientation in space of the joint A may be determined by a reference plane, understood as plane in which the respective portions fixed together of the two samples 101, 102 set themselves parallel.

The tensile test (Figure 7A) envisages withholding the two samples 101, 102 from the respective opposite edges 101A, 101B and 102A, 102B, and exerting a tensile action in a direction Z orthogonal to the reference plane of the joint A to separate the two samples.

The peeling test (Figure 7B) envisages, instead, withholding the two samples 101, 102, each only at a respective edge 101B or 102B that is located on a given side of the two samples with respect to the joint A (the side must be the same for the two samples), and exerting a tensile action in the direction Z to separate the two samples; in this case, detachment of the two samples is obtained gradually in the form, precisely, of a movement of peeling of one sample from the other.

Finally, the shear-and-slip test (Figure 7C) envisages withholding the two samples 101, 102 so that both will be parallel to the reference plane of the joint A, and moving one of the two samples in the respective plane of lie in a direction Y parallel to the reference plane of the joint to separate it from the other sample; in this case, detachment between the two samples is obtained gradually according to a movement of sliding of one sample with respect to the other.

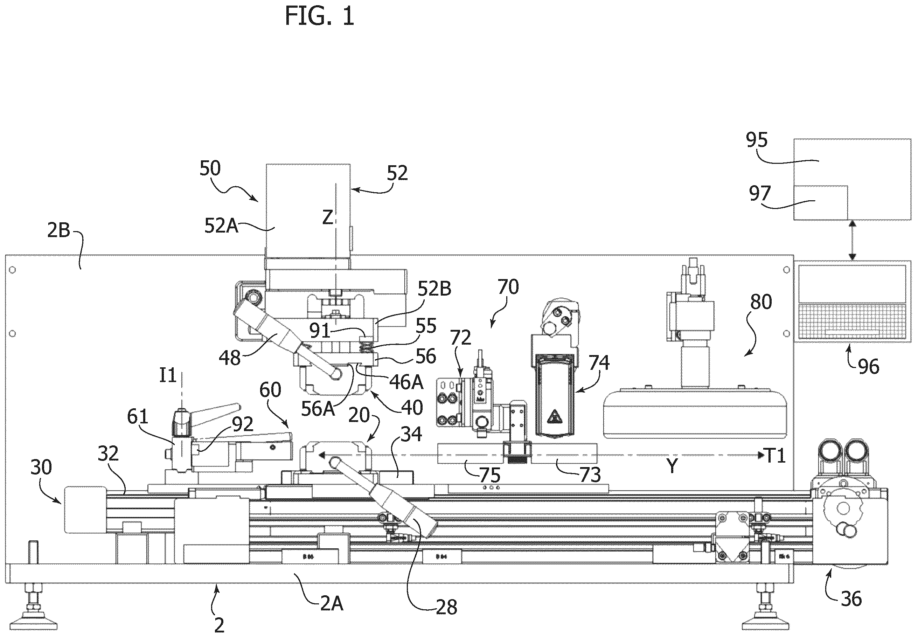

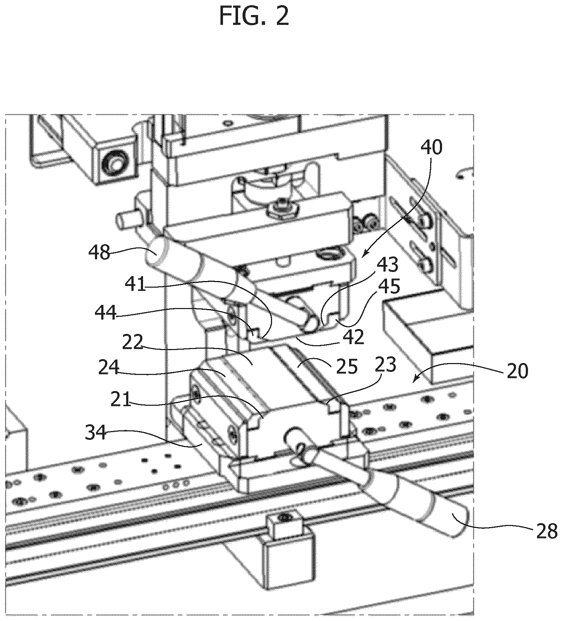

With reference now to the preferred embodiment illustrated in Figures 1 to 5, the corresponding testing apparatus - designated as a whole by the reference number 10 - is configured to conduct all three tests discussed above.

In one or more preferred embodiments like the one illustrated, the apparatus 10 has a supporting frame 2 comprising a base 2A, which is horizontal, and a rear wall 2B, which is vertical; in the example illustrated, the base 2A and the rear wall 2B have substantially one and the same width (as viewed in Figure 1).

In one or more preferred embodiments like the one illustrated, the apparatus 10 comprises a gripping unit 20 and a movement system 30 for moving the gripping unit 20 in a reference direction Y.

In one or more preferred embodiments like the one illustrated, the movement system 30 comprises a rectilinear guide 32, which is set on the base 2A and extends longitudinally in the reference direction Y, covering approximately the entire base 2A; the movement system 30 further comprises a slide 34, which can be driven in motion along the guide 32 by means of an actuator 36 and on which the gripping unit 20 is set.

By driving the slide 34, the gripping unit 20 is mobile in the reference direction Y for a stretch of movement T1.

Moreover, in one or more preferred embodiments like the one illustrated, the apparatus 10 comprises a gripping unit 40 and a movement system 50 for moving the gripping unit 40 in a vertical reference direction Z orthogonal to the reference direction Y.

In one or more preferred embodiments like the one illustrated, the movement system 50 comprises a linear actuator 52 having a fixed part 52A that is carried by the rear wall 2B, and a mobile part 52B that is connected the gripping unit 40.

As will be seen in greater detail hereinafter, the two gripping units 20 and 40 are configured for withholding the two samples of sheet material 101, 102, specifically to perform the tensile test and the peeling test (see Figures 7A, 7B).

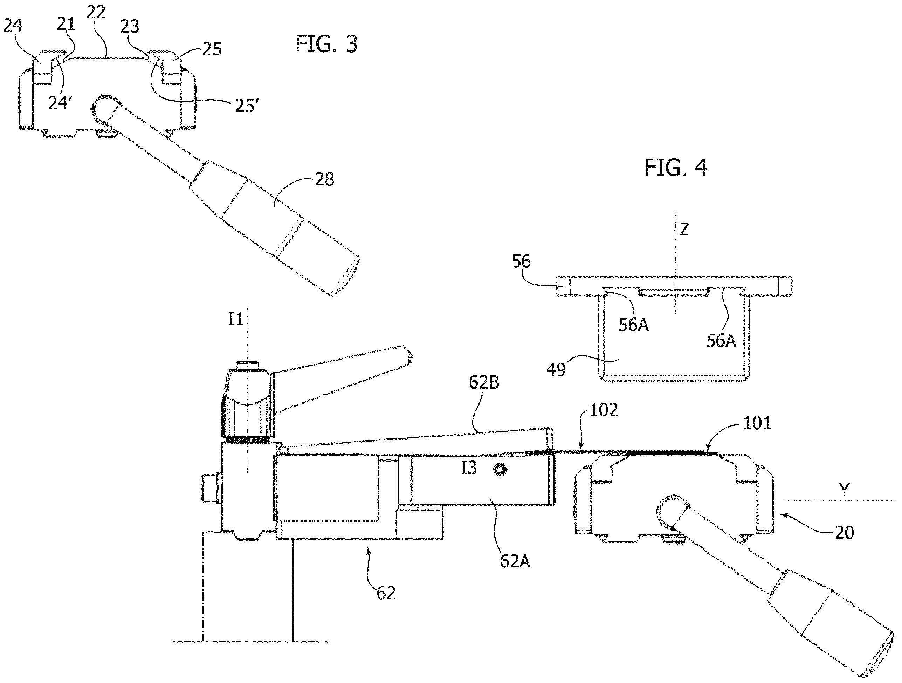

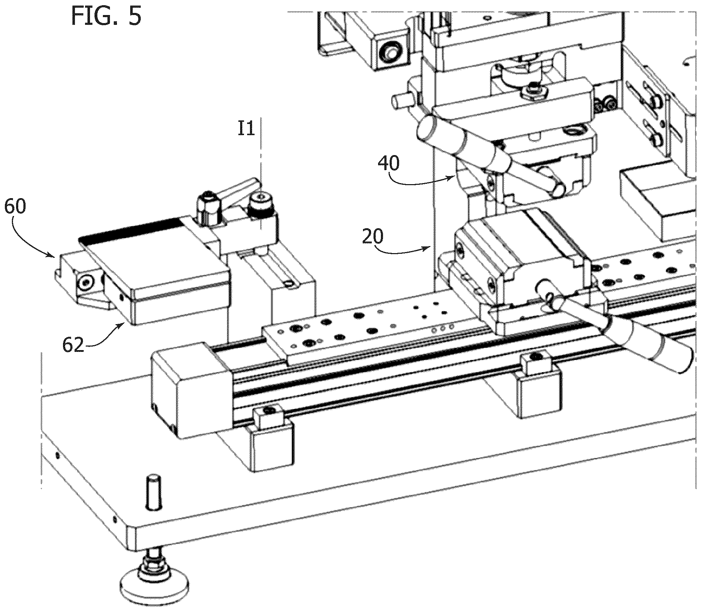

In one or more preferred embodiments like the one illustrated, the apparatus 10 further comprises a gripping unit 60, which is carried by a support 61 fixed to the base 2A and can be displaced between a resting position (Figure 5) and a position of use (Figures 1 and 4), through a rotation thereof about an axis of rotation 11.

The gripping unit 60 is configured for withholding the sample of sheet material 102 to carry out the shear-and-slip test in co-operation with the gripping unit 20, which, instead, operates to withhold the sample 101 (see Figure 7C).

In one or more preferred embodiments like the one illustrated, the apparatus 10 comprises a system 70 for applying glue and a viewing device 80, which are arranged on the rear wall 6B, alongside the actuator 52.

The glue-applicator system 70 and the viewing device 80 are arranged in succession along the stretch T1 of movement of the gripping unit 20, and are both prearranged to operate on the sample of sheet material 101 that is brought thereto by the gripping unit 20, when the latter moves along the stretch T1.

In one or more preferred embodiments like the one illustrated, the glue-applicator system 70 comprises a first dispensing head 72, which is configured for dispensing glue of a first type, for example a cold-setting glue, and a second dispensing head 74, which is configured for dispensing glue of a second type, for example a thermosetting glue.

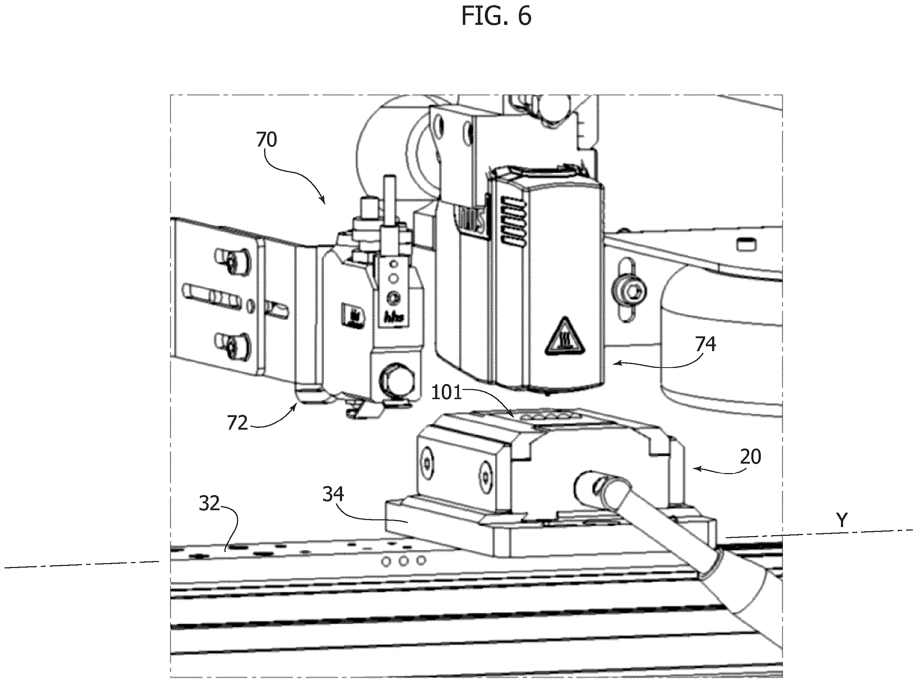

In one or more preferred embodiments like the one illustrated, the first dispensing head 72 and the second dispensing head 74 are arranged in two distinct positions of the stretch T1 of movement (see Figures 1 and 6).

Moreover, in one or more preferred embodiments like the one illustrated, the glue-applicator system 70 comprises a first collection receptacle 73 and a second collection receptacle 75, which are normally positioned underneath the two dispensing heads 72, 74, respectively.

The two collection receptacles 73, 75 have the function of collecting the glue that is dispensed by the dispensing heads 72, 74 in a step of purging preliminary to the step of application proper of the glue on the sample 101.

Moreover, the two collection receptacles 73, 75 are prearranged for moving into a shifted position to enable the two dispensing heads 72, 74 to dispense the glue onto the sample 101.

In the example illustrated, the two receptacles 73, 75 are in particular mobile by translation in a direction transverse to the rear wall 2B. Preferably, the two receptacles 73, 75 can be taken down from the structure by which they are carried, for example to undergo a washing operation.

In one or more preferred embodiments like the one illustrated, the viewing device 80 comprises a camera and is equipped with a wide-spectrum light source; preferably, the light source is configured for emitting a directionable light beam.

The viewing device 80 has the function of recording images of the sample 101.

The above recording operation can be conducted both immediately after application of the layer of glue on the sample 101 and after rupture of the joint A, as will be explained in greater detail in what follows.

In one or more preferred embodiments like the one illustrated, the two gripping units 20, 40 are both prearranged for gripping the two opposite edges of the respective sample of sheet material.

In particular, in one or more preferred embodiments like the one illustrated, the gripping unit 20 comprises a first contrast surface 21, a second contrast surface 23, and a resting surface 22, which is set between the two contrast surfaces 21, 23.

The resting surface 22 is configured for receiving the sample 101 in an extended condition, preferably in a horizontal plane orthogonal to the reference direction Z.

Moreover, the gripping unit 20 comprises a first locking member 24, configured for locking a first edge 101A of the sample 101 against the first contrast surface 21, and a second locking member 25, configured for locking the opposite edge 101B of the sample 101 against the second contrast surface 23.

The two locking members 24, 25 are mobile with respect to the contrast surfaces 21, 23 between a locking position, in which the above members lock the opposite edges of the sample 101 against the two contrast surfaces, and an open position, in which the two members are, instead, set at a distance from the two contrast surfaces.

In one or more preferred embodiments like the one illustrated, the two contrast surfaces 21, 23 are both inclined with respect to the resting surface 22, preferably according to respective angles symmetrical with respect to the resting surface 22. The two locking members 24, 25 have corresponding inclined surfaces 24', 25'.

In one or more preferred embodiments like the one illustrated, the movement of the two locking members 24, 25 between the open position and the locking position can be driven manually by means of a lever 28. Preferably, this movement is a rectilinear movement in a direction orthogonal to the resting surface 22.

The lever 28 can be connected operatively to the two locking members 24, 25 using means of a known type, for example a cam system, a system of levers, a system of gears, or a hybrid system that combines together different components of such systems, etc.

In one or more preferred embodiments like the one illustrated, the gripping unit 40 is provided with gripping means of the same type and comprises, in particular, a first contrast surface 41, a resting surface 42, a second contrast surface 43, and two locking members 44, 45, which can be operated by means of an operating lever 48. It should be noted that the teachings provided above with reference to the gripping unit 20 apply in the same way to the gripping unit 40 and, consequently, will not be repeated hereinafter.

In one or more preferred embodiments like the one illustrated, the gripping unit 40 is connected to the mobile part 52B of the actuator 52 by interposition of one or more elastic elements 55.

The elastic elements 55 have the function of establishing a maximum limit of the force that can be transmitted from the actuator 50 to the gripping unit 40.

In one or more preferred embodiments like the one illustrated, the elastic elements 55 are in particular arranged between the mobile part 52B of the actuator 52 and an attachment base 56, which is mobile towards the part 52B against the action exerted by the elastic elements 55.

The attachment base 56 is configured for receiving the gripping unit 40 and fixing it to itself by releasable-fixing means.

In the embodiment illustrated, the attachment base 56 has dove-tail connection portions 56A, configured for being coupled to corresponding portions 46A provided on the gripping unit 40. A locking element (not illustrated) governed by a spring and carried by the attachment base 56 can engage the gripping unit 40 to prevent any horizontal movement thereof with respect to the attachment base 56.

In one or more preferred embodiments, the gripping unit 40 may moreover be provided with a suction system for withholding the sample 102, in addition to the two locking members 44, 45.

In particular, in one or more preferred embodiments, a plurality of holes (not illustrated) can be made in the resting surface 43 and set in fluid communication with a negative-pressure source, i.e., a vacuum source.

Thanks to the aforesaid suction system, the gripping unit 40 is able to withhold the sample on its resting surface 42.

In one or more preferred embodiments like the one illustrated, the apparatus 10 further comprises a suction unit 49, which can be mounted on the attachment base 56 in place of the gripping unit 40 and can be connected thereto by way of the same fixing means used for connection of the gripping unit 40. As will be seen in what follows, the suction unit 49 is to operate during the shear-and-slip test.

In one or more preferred embodiments like the one illustrated, the apparatus 10 comprises a force sensor 91 configured for detecting a datum indicating the force to which the gripping unit 40 is subjected in the reference direction Z.

In one or more preferred embodiments like the one illustrated, the force sensor 91 is in particular set engaged to at least one of the elastic elements 55. The force sensor 91 may for example be a load cell.

In one or more preferred embodiments like the one illustrated, the gripping unit 60 is, instead, constituted by a gripper 62 comprising a fixed support 62A and a locking member 62B that can rotate about an axis of rotation I3 between an open position and a locking position in a way similar to the locking members referred to above. Preferably, the locking member 62B can be governed manually.

In one or more preferred embodiments like the one illustrated, the apparatus 10 comprises a second force sensor 92 configured for detecting a datum indicating the force to which the gripping unit 60 is subjected in the reference direction Y. This sensor may, for example, be set engaged to the support 62A of the gripper 62. The force sensor 92 may for example be a load cell.

Incidentally, it is pointed out that the viewing device 80 and the two force sensors 91, 92 constitute together a detection system of the apparatus 10, which performs the function of detecting data indicating one or more features of the joint A between the two samples 101, 102.

In one or more preferred embodiments like the one illustrated, the apparatus 10 further comprises a control unit 95 configured for driving the two movement systems 30, 50 and the glue-applicator system 70, and for receiving signals from the force sensors 91, 92 and from the viewing device 80.

In one or more preferred embodiments, the control unit 95 is configured for enabling implementation by the apparatus 10 of each of the three tests discussed above, i.e., the tensile test, the peeling test, and the shear-and-slip test (see Figures 7A, 7B, and 7C).

In one or more preferred embodiments, the apparatus 10 comprises a storage unit 97, in which the data detected by the sensors 91, 92 and by the viewing device 80 are saved during performance of the tests.

In one or more preferred embodiments like the one illustrated, the apparatus 10 comprises a user interface 96 operatively connected to the control unit 95 and configured to enable an operator to set and control operation of the apparatus. Possibly, the user interface 96 may also be configured for displaying the data gleaned during the tests and saved in the storage unit 97.

With reference to the tensile test, the operator will set preliminarily the first sample 101 on the gripping unit 20 and the second sample 102 on the gripping unit 40.

In particular, to set the first sample 101 on the gripping unit 20, the operator will move the locking members 24, 25 into the open position, rest the sample 101 on the resting surface 22, and finally bring the two locking members 24, 25 into the locking position to lock the opposite edges 101A, 101B of the sample against the contrast surfaces 21, 23.

Fixing of the second sample 102 on the second gripping unit 40 may be carried out in a similar way.

At this point, the operator can start the tensile-test cycle via the user interface 96.

According to the testing cycle to be carried out upon command from the control unit 95, the gripping head 20 is moved along the stretch T1 to bring the first sample 101 underneath the glue-applicator system 70, and the latter is then activated to apply a layer of glue on the first sample 101 (see Figure 6).

Application of glue is preferably carried out while the gripping unit 20 is moving. Alternatively, application of glue can be carried out while the gripping unit is stationary in a given position underneath one of the two dispensing heads 72, 74.

Application of the glue may envisage dispensing of glue by just one of the two dispensing heads 72, 74 or else by both of them.

Possibly, after application of the glue, the gripping unit 20 can advance until it reaches the viewing device 80, for example to enable the latter to record images of the layer of glue as soon as it has been laid on the sample 101.

Next, through a movement in the opposite direction, the gripping unit 20 moves back underneath the second gripping unit 40.

At this point, by means of the movement system 50 the second gripping unit 40 is moved downwards, along the reference axis Z, to bring the second sample 102 into contact with the first sample 101 and obtain the j oint A of the two samples through the layer of glue previously applied. It will be noted that the reference plane of the joint A is determined by the resting surface 22 of the gripping unit 20.

Preferably, the gripping unit 40 presses the second sample 102 against the first sample 101 with a pre-set force to guarantee proper formation of the joint A.

For this purpose, the control unit 95 can be configured for driving the actuator 52 as a function of the signal received from the force sensor 91.

After formation of the joint A, the testing cycle then envisages bringing about rupture of the joint itself, via a movement of the gripping unit 40 in the opposite direction so as to separate the second sample 102 from the first sample 101 in the reference direction Z.

Preferably, during this action of detachment, the force sensor 91 detects the force to which the gripping unit 40 is subjected.

In some applications, the gripping unit 20 can finally be moved again along the stretch T1 to bring the first sample 101 up to the detection device 80 so that the latter can record images of the residue of glue of the joint A that has remained attached to the first sample 101 or else the residue of material that has detached from the first or second sample (this phenomenon is technically referred to as "fibre detachment"). The data detected by the detection device 80 can be used for estimating the amount of the aforesaid residue; this operation can be carried out by the detection device 80 itself or else by the control unit 95.

The data detected by the viewing device 80 and by the force sensor 91 during the testing cycle, and the data estimated by the detection device 80 or by the control unit 95 can be saved in the storage unit 97.

With reference now to the peeling test, also in this case the operator will have to arrange the first sample 101 on the gripping unit 20 and the second sample 102 on the gripping unit 40.

However, unlike the locking mode envisaged for the tensile test, each sample is fixed to the respective gripping unit by just one edge.

With reference to the testing mode represented in Figure 7B, the edge 101B of the first sample 101 is fixed to the gripping unit 20 via the locking member 23, and, likewise, the edge 102B of the second sample is fixed to the gripping unit 40 via the locking member 43.

Preferably, the second sample 102 is simultaneously withheld against the resting surface 42 by the suction means, referred to above, provided in the gripping unit 40, until the action of detachment of the two samples has started.

For implementation of the cycle of the peeling test, the apparatus 10 basically operates in the same way as indicated above with reference to the tensile test, and, hence, first the gripping unit 20 moves along the stretch T1 for application of the layer of glue on the sample 101 (and possibly for subjecting the layer of glue to detection by the device 80), then the gripping unit 40 drops down to bring the two samples 101, 102 into contact and form the joint A, and finally the gripping unit 40 itself rises to perform the action of detachment of the two samples.

On account of the mode of gripping of the two samples only by a respective edge, the action of detachment carried out by the gripping unit 40 brings about a gradual separation of the two samples according to a peeling movement.

Preferably, during the action of detachment the force sensor 91 detects the force to which the gripping unit 40 is subjected, and, after rupture of the joint A, the gripping unit 20 brings the first sample 101 up to the detection device 80.

The data detected by the force sensor 91 and by the viewing device 80 during the testing cycle can be saved in the storage unit 97.

Finally, with reference to the shear-and-slip test, the operator must preliminarily bring the gripping unit 60 from its position of non-use to its position of use, and mount the suction unit 49 in place of the gripping unit 40. Next, the operator can arrange the first sample 101 on the first gripping unit 20 and the second sample 102 on the third gripping unit 60.

The first sample 101 is arranged and fixed to the first gripping unit 20 in the same mode as described above with reference to the tensile test.

On the other hand, the second sample 102 is fixed to the third gripping unit 60 only by its edge 102A.

The portion of the second sample 102 that projects from the gripping unit 60 is instead engaged and withheld by the suction unit 49, at least until the action of detachment of the two samples has been started.

According to the testing cycle to be carried out upon command from the control unit 95, the first sample 101 is subjected to the same operations as those already described previously, for application of the layer of glue and possibly for recording images of the sample by the viewing device 80.

When the gripping unit 20 moves, with the sample 101 and the layer of glue applied thereon, back underneath the suction unit 49, the latter is moved downwards to bring the second sample 102 against the first sample 101 and form the joint A by means of the layer of glue. It will be noted that, also in this case, the reference plane of the joint A is determined by the resting surface 22 of the gripping unit 20. Also in this case, preferably the suction unit 49 presses the second sample 102 against the first sample 101 with a pre-set force to guarantee proper formation of the joint A.

Once the joint A is formed, the two samples 101, 102 are in the configuration represented in Figure 7C.

Next, the gripping unit 20 is moved in the reference direction Y to separate the first sample 101 from the second sample 102 in the same reference direction so as to bring about rupture of the joint A.

During the aforesaid action of detachment, the sample 101 moves with respect to the second sample 102 according to a sliding movement.

Preferably, during the aforesaid action the force sensor 92 detects the force to which the gripping unit 60 is subjected.

Preferably, after rupture of the joint A, the gripping unit 20 brings the sample 101 up to the viewing device 80 so that the latter can record images of the residue of the joint A that has remained attached to the sample itself (i.e., fibre detachment).

The data detected by the sensor 92 and by the viewing device 80 during the testing cycle can be saved in the storage unit 97.

In an alternative embodiment, the function described above performed by the suction unit 49 can instead be performed directly by the gripping unit 40 equipped with suction means.

In view of the foregoing, it appears clearly how the apparatus described herein is able to implement automatically a series of testing cycles for gathering data useful to determine the properties of a glue.

In this connection, the person skilled in the sector will understand that the data detected by the force sensors 91, 92 provide an indication on the strength of the joint A formed using glue.

On the other hand, the data detected by the viewing device 80 may instead provide an indication on the behaviour of the glue from the chemico-physical standpoint with the packaging material used.

In preferred embodiments, via the user interface 96 the operator can vary the process parameters the testing cycles (for example, times, forces, speeds, etc.) so as to verify the properties of the glue in different conditions.

On the other hand, it may be noted that the apparatus described herein can also be configured for implementing just one or two of the tests referred to above.

For instance, the apparatus described herein may be provided with just the gripping units 20 and 40 to perform the tensile test and the peeling test.

According to a further example, the apparatus described herein may instead be provided with the two gripping units 20 and 60 and with the suction unit 49 to perform the shear-and-slip test.

According to yet a further example, the apparatus described herein may be provided with just two gripping units 20 and 40, to conduct the peeling test; in this case, the two gripping units 20, 40 may in turn be equipped only with the two locking members 25 and 45, respectively, and not also with the other two locking members 24 and 44.

Of course, without prejudice to the principle of the invention, the details of construction and the embodiments may vary, even significantly, with respect to what has been illustrated herein purely by way of non-limiting example, without thereby departing from the scope of the invention, as defined in the annexed claims.

## Claims

1. An apparatus for carrying out tests on joints of sheet packaging materials that are obtained by gluing,
the apparatus comprising:
- a gripping unit (20) configured to withhold at least a first edge (101A, 101B) of a first sample (101) of sheet material;
- at least one further gripping unit (40, 60) configured to withhold at least a first edge (102A, 102B) of a second sample (102) of sheet material;
- a system (70) for applying glue;
- at least one movement system (30, 50) for moving said first gripping units (20) and/or said second gripping unit (40);
- a detection system (80, 91, 92); and
- a control unit (95) configured to receive signals from said detection system (80) and to drive said glue-applicator system (70) and said at least one movement system (30, 50), said control unit (95) being configured to implement an automatic testing cycle comprising the steps of:
- by means of said glue-applicator system (70), applying a layer of glue on said first sample (101);
- by means of said at least one movement system (30, 50), positioning said second or first sample (102, 101) on said first or second sample (101, 102) with said layer of glue set in between and pressing said second or first sample (102, 101) against said first or second sample (101, 102) to obtain, by means of said layer of glue, a joint (A) between said first and second samples;
- by means of said at least one movement system (30, 50), performing an action of detachment whereby said second or first sample (102, 101) is separated from said first or second sample (101, 102) in a given direction (Z; Y), thus bringing about rupture of said joint (A);
- by means of said detection system (80, 91, 92), detecting one or more data indicating at least one feature of said joint (A) before and/or during and/or after said action of detachment.

2. The apparatus according to claim 1, wherein said at least one movement system (30, 50) is configured to perform an action of detachment whereby said second or first sample (102, 101) is separated from said first or second sample (101, 102) in a first direction (Z) orthogonal to a reference plane in which said joint (A) lies, or else in a second direction (Y) parallel to said reference plane.

3. The apparatus according to claim 1 or claim 2,
wherein at least one between said gripping unit (20) and at least one further gripping unit (40) comprises:
- a contrast surface (23, 43); and
- at least one locking member (24, 44, 25, 45) mobile with respect to said contrast surface (23, 43) between an open position and a locking position where said at least a first edge (101B, 102B) of said first or second sample (101, 102) is locked against said contrast surface (23, 43) by said locking member (24, 25, 44, 45).

4. The apparatus according to claim 3, wherein said at least one between said gripping unit and said at least one further gripping unit comprises:
- a second contrast surface (21, 41), said at least one locking member (24, 44, 25, 45) being configured to lock, in said locking position, a second edge (101A, 102A) of said first or second sample (101, 102) against said second contrast surface (21, 41); and
- a resting surface (22, 42) set between said first contrast surface (21, 41) and said second contrast surface (23, 43) and configured to receive said first or second sample (101, 102) in an extended condition.

5. The apparatus according to claim 4, wherein said first and said second contrast surfaces (21, 41, 23, 43) are both inclined with respect to said resting surface (22, 42).

6. The apparatus according to claim 2, wherein said at least one movement system (30, 50) comprises:
- a first movement system (50) for moving said at least one further gripping unit (40) in said first direction (Z); and
- a second movement system (30) for moving said gripping unit (20) in said second direction (Y).

7. The apparatus according to any one of the preceding claims, wherein:
- said detection system comprises at least one force sensor (91, 92); and
- said control unit (95) is configured to detect, by means of said force sensor, a datum indicating a force to which said gripping unit (20) and/or said at least one further gripping unit (40, 60) is subjected as a result of said action of detachment.

8. The apparatus according to claim 7, when this depends upon claim 6, wherein:
- set between said at least one further gripping unit (40) and said second movement system (50) are one or more elastic elements (55); and
- said force sensor (91) is configured to detect a force exerted on said elastic elements (55).

9. The apparatus according to claim 2, wherein said at least one further gripping unit comprises a first further gripping unit (40) configured to withhold the at least a first edge (102A, 102B) of the second sample (102) of sheet material, during a first automatic testing cycle, and a second further gripping unit (60) for withholding the at least a first edge (102A, 102B) of the second sample (102) of sheet material in place of the first further gripping unit (40), during a second automatic testing cycle;
wherein said at least one movement system comprises a first movement system (50) for moving said first further gripping unit (40) in said first direction (Z) with respect to said gripping unit (20) so as to perform said action of detachment whereby said second sample (102) is separated from said first sample (101) in said first direction (Z); and
wherein said at least one movement system comprises a second movement system (30) for moving said gripping unit (20) in said second direction (Y) with respect to said second further gripping unit (60) so as to perform said action of detachment whereby said first sample (101) is separated from said second sample (102) in said second direction (Y).

10. The apparatus according to claim 9, wherein said apparatus further comprises a suction unit (49), which is configured to withhold by suction a portion of said second sample (102) that projects from said second further gripping unit (60).

11. The apparatus according to claim 10, wherein said first further gripping unit (40) can be connected to said first movement system (50) by releasable-fixing means, and wherein said suction unit (49) can be connected by means of said releasable-fixing means to said first movement system (50) in place of said first further gripping unit (40).

12. The apparatus according to any one of the preceding claims, comprising a suction unit (49), which is configured to withhold by suction a portion of said second sample (102) that projects from said at least one further gripping unit (60).

13. The apparatus according to claim 12, when this depends upon claim 2, wherein said at least one movement system (30, 50) comprises:
- a first movement system (50) for moving said suction unit (49) in said first direction (Z) so as to press said second sample (102) against said first sample (101) to obtain, by means of said layer of glue, said joint (A) between said first sample and said second sample; and
- a second movement system (30) for moving said gripping unit (20) in said second direction (Y) with respect to said at least one further gripping unit (60) so as to perform said action of detachment whereby said first sample (101) is separated from said second sample (102) in said second direction (Y).

14. The apparatus according to claim 6, 9, or claim 13, wherein said second movement system (30) is configured to move said gripping unit (20) in said second direction (Y) for a predefined movement stretch (T1) and wherein said glue-applicator system (70) is set along said predefined movement stretch (T1).

15. The apparatus according to claim 14, wherein said glue-applicator system (70) comprises a first glue-dispensing head (72) for dispensing glue of a first type, and a second glue-dispensing head (74) for dispensing glue of a second type, and wherein, preferably, said first dispensing head (72) is set in a first position along said predefined movement stretch (T1), and said second dispensing head (74) is set in a second position along said predefined movement stretch (T1).

16. The apparatus according to any one of the preceding claims, wherein said detection system comprises a viewing device (80) for recording images of said first sample and/or said second sample (101, 102), in particular after rupture of said joint (A), so as to detect one or more data indicating at least one feature of said joint (A), and wherein, preferably, said viewing device (80) comprises a wide-spectrum light source configured to emit a directionable light beam.

17. The apparatus according to claim 16, when this depends upon claim 14, wherein said viewing device (80) is set along said predefined movement stretch (T1), in a position upstream or downstream of said glue-applicator system (70) with reference to a movement of said gripping unit (20) in a direction away from said at least one gripping unit (40, 60).

18. A method for carrying out tests on joints of sheet packaging materials that are obtained by gluing, by means of an apparatus (10) according to any one of the preceding claims, comprising the following steps:
- by means of said gripping unit (20), withholding at least a first edge (101A, 101B) of said first sample (101);
- by means of said at least one further gripping unit (40, 60), withholding at least a first edge (102A, 102B) of said second sample (102);
- performing an automatic testing cycle comprising the following steps:
- by means of said glue-applicator system (70), applying a layer of glue on said first sample (101);
- by means of said at least one movement system (30, 50), positioning said second or first sample (102, 101) on said first or second sample (101, 120) with said layer of glue set in between, and pressing said second or first sample (102, 101) against said first or second sample (101, 102) to obtain, by means of said layer of glue, a joint (A) between said first sample and said second sample;
- by means of said at least movement system (30, 50), performing an action of detachment whereby said second or first sample (102, 101) is separated from said first or second sample (101, 102) in a given direction (Z; Y), thus bringing about rupture of said joint (A); and
- by means of said detection system (80, 91, 92), detecting one or more data indicating at least one feature of said joint (A) before and/or during and/or after said action of detachment.

19. The method according to claim 18, which includes:
by means of said gripping unit (20), withholding said first edge (101A) of said first sample (101) and a second edge (101B) of said first sample (101), opposite to said first edge (101A), wherein said first sample (101) is at least partially laid on a resting surface (22) of said gripping unit (20); and
by means of said at least one further gripping unit (40), withholding said first edge (102A) of said second sample (102) and a second edge (102B) of said second sample (102), opposite to said first edge (102A), wherein said second sample (102) is at least partially laid on a resting surface (42) of said at least one further gripping unit (40);
wherein pressing said second or first sample (102, 101) against said first or second sample (101, 102) to form said joint (A) includes pressing, via said resting surface (42) of said at least one further gripping unit (40) or said gripping unit (20), said second or first sample against said first or second sample that is resting on said resting surface (22) of said gripping unit or said at least one further gripping unit; and
wherein performing said action of detachment includes moving said at least one further gripping unit (40) or said gripping unit (20) in a direction (Z) orthogonal to said resting surfaces (22, 42) of said gripping unit (20) and said at least one further gripping unit (40).

20. The method according to claim 18, wherein said automatic testing cycle comprises:
- by means of said gripping unit (20), gripping said first edge (101B) of said first sample (101) and a second edge (101A) of said first sample (101), opposite to said first edge (101B), where said first sample (101) is at least partially laid on a resting surface (22) of said gripping unit (20);
- withholding the first edge (102A) of said second sample (102) by means of said at least one further gripping unit (60), and withholding a portion of said second sample (102) that projects from said at least one further gripping unit (60) by means of a suction unit (49),
wherein said step of pressing includes pressing, by means of said suction unit (49), said second sample (102) against said first sample (101);
wherein said second sample (102) withheld by said at least one further gripping unit (60) and joined to said first sample (101) through said joint (A) is in an extended condition in a plane parallel to said resting surface (22) of said first gripping unit (20); and
wherein performing said action of detachment includes moving said gripping unit (20) in a direction (Y) parallel to said resting surface (22) of said gripping unit (20).

21. The method according to claim 18, wherein:
- said step of withholding said at least a first edge (101A, 101B) of said first sample (101) includes withholding only said first edge (101B) of said first sample (101); and
- said step of withholding said at least one second edge (102A, 102B) of said second sample (102) includes withholding only said first edge (102B) of said second sample (102);
said method further comprising withholding via suction a portion of said second sample (102) against a resting surface of said at least one further gripping unit (40) until the action of detachment of said first and said second samples (101, 102) has been started,
wherein performing said action of detachment includes moving said at least one further gripping unit (40) or said gripping unit (20) in a direction (Z) orthogonal to said resting surface (42) of said at least one further gripping unit.
